# EUROPEAN PATENT SPECIFICATION

(11) **EP 3 857 769 B1**
(45) Date of publication and mention of the grant of the patent: **15.11.2023**
(21) Application number: 19867737.9
(22) Date of filing: 27.09.2019
(51) Int. Cl.: H04L 1/1822, H04L 1/1867, H04W 74/08

(54) **USER EQUIPMENT AND METHOD FOR RANDOM ACCESS PERFORMED BY USER EQUIPMENT**
NUTZERGERÄT UND DURCH NUTZERGERÄT DURCHEFÜHRTES VERFAHREN FÜR DIREKTZUGRIFF
ÉQUIPEMENT UTILISATEUR ET PROCÉDÉ D'ACCÈS ALÉATOIRE MIS EN OEUVRE PAR UN ÉQUIPEMENT UTILISATEUR

(30) Priority: 27.09.2018 US 201862737236 P
(43) Date of publication of application: 04.08.2021
(73) Proprietor: FG Innovation Company Limited, Hong Kong (CN)
(72) Inventor: WEI, Chiahung, Hsinchu, Taiwan 300 (TW); CHIN, Hengli, Taipei City, Taiwan 110 (TW); CHOU, Chieming, Hsinchu City, Taiwan 300 (CN)
(74) Representative: Müller-Boré & Partner Patentanwälte PartG mbB
(86) International application number: PCT/CN2019/108534
(87) International publication number: WO 2020/063862

(56) References cited:
- EP-A1- 3 850 902
- CN-A- 101 043 304
- CN-A- 104 737 614
- US-A1- 2008 101 411
- SAMSUNG ELECTRONICS: "Msg3 handling for swtiching between CBRA to CFRA", 3GPP DRAFT; R2-1811107_MSG3 HANDLING FOR SWTICHING BETWEEN CBRA TO CFRA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG2, no. Gothenburg, Sweden; 20180820 - 20180824 10 August 2018 (2018-08-10), XP051520803, Retrieved from the Internet: URL:http://www.3gpp.org/ftp/tsg%5Fran/WG2% 5FRL2/TSGR2%5F103/Docs/R2%2D1811107%2Ezip [retrieved on 2018-08-10]
- LG Electronics Inc: "Handling of the Msg3 buffer for RA switching", 3GPP TSG-RAN2 Meeting RAN2#103, R2-1812784, 24 August 2018 (2018-08-24), XP051522376,
- CATT: "Msg3 MAC PDU assembly in NR", 3GPP TSG-RAN WG2 #103, R2-1811211, 24 August 2018 (2018-08-24), XP051520883,
- VIVO: "Discussion on the switch between CFRA and CBRA", 3GPP TSG-RAN WG2 Meeting #103, R2-1811898, 24 August 2018 (2018-08-24), XP051521533,

## Description

### FIELD

The present disclosure generally relates to wireless communication, and more particularly, to a method for random access performed by a user equipment and a user equipment.

### BACKGROUND

Various efforts have been made to improve different aspects of wireless communications, such as data rate, latency, reliability and mobility, for the next generation (e.g., fifth generation (5G) New Radio (NR)) wireless communication systems. In NR, an RA procedure may include steps of RA procedure initialization, RA resource selection, RA preamble transmission, RA response reception, and contention resolution. During an ongoing RA procedure, a user equipment (UE) may perform an RA resource selection before each preamble retransmission. The UE may select different RA resources each time it performs an RA resource selection. There is a need in the industry for an improved and efficient mechanism for the LTE to select different RA resources in the RA procedure.

Samsung Electronics, "Msg3 handling for switching between CBRA to CFRA", 3GPP TSGRAN2 #106, Gothenburg, Sweden, 20 to 24 August 2018, 3GPP Draft R2-1811107, describes that UE may switch from CBRA to CFRA during the random access procedure. Upon processing the UL grant received in RAR for CFRA, UE delivers the MAC PDU in Msg3 buffer (if available) and the uplink grant and the HARQ information of the TB to the identified HARQ process. Upon receiving the RAR successfully for CF RA preamble transmission, if the size of the MAC PDU in the Msg3 buffer (if available) is not equal to size of the received UL grant: indicate to the Multiplexing and assembly entity to include MAC SDU(s) from the MAC PDU in Msg3 buffer in the subsequent uplink transmission: flush the Msg3 buffer.

Post-published European patent application EP 3 850 902 A1 describes apparatuses, methods, and systems are disclosed for using a medium access control protocol data unit in a message 3 buffer. One method includes, in response to a medium access control protocol data unit being in a message 3 buffer and receiving an uplink grant: obtaining (502) the medium access control protocol data unit from the message 3 buffer; if a first size of the uplink grant does not match a second size of the medium access control protocol data unit: indicating to a multiplexing and assembly entity to include medium access control subprotocol data units carrying medium access control service data units from the obtained medium access control protocol data unit in a subsequent uplink transmission; and obtaining the medium access control protocol data unit from the multiplexing and assembly entity.

### SUMMARY

The above and other objects are achieved by a method for random access performed by a user equipment (UE) and a user equipment (UE) as defined in the independent claims, respectively. Preferred embodiments are set forth in the dependent claims.

### BRIEF DESCRIPTION OF THE DRAWINGS

Aspects of the example disclosure are best understood from the following detailed description when read with the accompanying figures. Various features are not drawn to scale. Dimensions of various features may be arbitrarily increased or reduced for clarity of discussion.
Fig. 1 is a diagram illustrating an example contention-based RA (CBRA) procedure, according to an example implementation of the present application.
Fig. 2 is a diagram illustrating an example contention-free RA (CFRA) procedure, according to an example implementation of the present application.
Fig. 3 is a block diagram illustrating a MAC entity of a UE, according to the present application.
Fig. 4 is a flowchart of an example method performed by a MAC entity in an RA procedure, according to an example implementation of the present application.
Fig. 5 is a flowchart of a method performed by a HARQ entity in an RA procedure, according to the present application
Fig. 6 is a flowchart of a method performed by a HARQ entity in an RA procedure, according to the present application
Fig. 7 shows an example MAC PDU, according to an example implementation of the present application.
Fig. 8 is a flowchart of a method for an RA procedure performed by a UE, according to the present application.
Fig. 9 is a flowchart of an example method for an RA procedure performed by a UE, according to an example implementation of the present application.
Fig. 10 is a block diagram illustrating a device for wireless communication according to various aspects of the present application.

### DETAILED DESCRIPTION

The following description contains specific information pertaining to example implementations in the present disclosure. The drawings in the present disclosure and their accompanying detailed description are directed to merely example implementations. However, the present disclosure is not limited to merely these example implementations. Other variations and implementations of the present disclosure are possible. Unless noted otherwise, like or corresponding elements among the figures may be indicated by like or corresponding reference numerals. Moreover, the drawings and illustrations in the present disclosure are generally not to scale, and are not intended to correspond to actual relative dimensions.

For the purpose of consistency and ease of understanding, like features may be identified (although, in some examples, not shown) by the same numerals in the example figures. However, the features in different implementations may be differed in other respects, and thus shall not be narrowly confined to what is shown in the figures.

The description uses the phrases "in one implementation," or "in some implementations," which may each refer to one or more of the same or different implementations. The term "coupled" is defined as connected, whether directly or indirectly through intervening components, and is not necessarily limited to physical connections. The term "comprising," when utilized, means "including, but not necessarily limited to"; it specifically indicates open-ended inclusion or membership in the so-described combination, group, series and the equivalent. The expression "at least one of A, B and C" or "at least one of the following: A, B and C" means "only A, or only B, or only C, or any combination of A, B and C."

Additionally, for the purposes of explanation and non-limitation, specific details, such as functional entities, techniques, protocols, standard, and the like are set forth for providing an understanding of the described technology. In other examples, detailed description of well-known methods, technologies, systems, architectures, and the like are omitted so as not to obscure the description with unnecessary details.

Any network function(s) or algorithm(s) described in the present disclosure may be implemented by hardware, software or a combination of software and hardware. Described functions may correspond to modules which may be software, hardware, firmware, or any combination thereof. The software implementation may comprise computer executable instructions stored on computer readable medium such as memory or other type of storage devices. For example, one or more microprocessors or general-purpose computers with communication processing capability may be programmed with corresponding executable instructions and carry out the described network function(s) or algorithm(s). The microprocessors or general-purpose computers may be formed of Applications Specific Integrated Circuitry (ASIC), programmable logic arrays, and/or using one or more Digital Signal Processor (DSPs). Although some of the example implementations described in this specification are oriented to software installed and executing on computer hardware, nevertheless, alternative example implementations implemented as firmware or as hardware or combination of hardware and software are well within the scope of the present disclosure.

The computer readable medium includes but is not limited to Random Access Memory (RAM), Read Only Memory (ROM), Erasable Programmable Read-Only Memory (EPROM), Electrically Erasable Programmable Read-Only Memory (EEPROM), flash memory, Compact Disc Read-Only Memory (CD-ROM), magnetic cassettes, magnetic tape, magnetic disk storage, or any other equivalent medium capable of storing computer-readable instructions.

A radio communication network architecture (e.g., a Long Term Evolution (LTE) system, an LTE-Advanced (LTE-A) system, an LTE-Advanced Pro system, or a 5G NR Radio Access Network (RAN)) typically includes at least one base station, at least one LTE, and one or more optional network elements that provide connection towards a network. The UE communicates with the network (e.g., a Core Network (CN), an Evolved Packet Core (EPC) network, an Evolved Universal Terrestrial Radio Access network (E-UTRAN), a 5G Core (5GC), or an internet), through a RAN established by one or more base stations.

It should be noted that, in the present application, a UE may include, but is not limited to, a mobile station, a mobile terminal or device, a user communication radio terminal. For example, a UE may be a portable radio equipment, which includes, but is not limited to, a mobile phone, a tablet, a wearable device, a sensor, a vehicle, or a Personal Digital Assistant (PDA) with wireless communication capability. The UE is configured to receive and transmit signals over an air interface to one or more cells in a radio access network.

A base station may be configured to provide communication services according to at least one of the following Radio Access Technologies (RATs): Worldwide Interoperability for Microwave Access (WiMAX), Global System for Mobile communications (GSM, often referred to as 2G), GSM Enhanced Data rates for GSM Evolution (EDGE) Radio Access Network (GERAN), General Packet Radio Service (GPRS), Universal Mobile Telecommunication System (UMTS, often referred to as 3G) based on basic wideband-code division multiple access (W-CDMA), high-speed packet access (HSPA), LTE, LTE-A, eLTE (evolved LTE, e.g., LTE connected to 5GC), NR (often referred to as 5G), and/or LTE-A Pro. However, the present disclosure is not limited to the above-mentioned protocols.

A base station may include, but is not limited to, a node B (NB) as in the UMTS, an evolved node B (eNB) as in the LTE or LTE-A, a radio network controller (RNC) as in the UMTS, a base station controller (BSC) as in the GSM/GERAN, a ng-eNB as in an E-UTRA base station in connection with the 5GC, a next generation Node B (gNB) as in the 5G-RAN, and any other apparatus capable of controlling radio communication and managing radio resources within a cell. The base station may serve one or more UEs through a radio interface.

The base station is operable to provide radio coverage to a specific geographical area using a plurality of cells forming the radio access network. The base station supports the operations of the cells. Each cell is operable to provide services to at least one UE within its radio coverage. More specifically, each cell (often referred to as a serving cell) provides services to serve one or more LTEs within its radio coverage (e.g., each cell schedules the downlink and optionally uplink resources to at least one UE within its radio coverage for downlink and optionally uplink packet transmissions). The base station can communicate with one or more LTEs in the radio communication system through the plurality of cells. A cell may allocate sidelink (SL) resources for supporting Proximity Service (ProSe) or Vehicle to Everything (V2X) service. Each cell may have overlapped coverage areas with other cells.

As discussed above, the frame structure for NR is to support flexible configurations for accommodating various next generation (e.g., 5G) communication requirements, such as Enhanced Mobile Broadband (eMBB), Massive Machine Type Communication (mMTC), Ultra-Reliable and Low-Latency Communication (URLLC), while fulfilling high reliability, high data rate and low latency requirements. The Orthogonal Frequency-Division Multiplexing (OFDM) technology as agreed in 3GPP may serve as a baseline for NR waveform. The scalable OFDM numerology, such as the adaptive sub-carrier spacing, the channel bandwidth, and the Cyclic Prefix (CP) may also be used. Additionally, two coding schemes are considered for NR: (1) Low-Density Parity-Check (LDPC) code and (2) Polar Code. The coding scheme adaption may be configured based on the channel conditions and/or the service applications.

Moreover, it is also considered that in a transmission time interval TX of a single NR frame, a downlink (DL) transmission data, a guard period, and an uplink (UL) transmission data should at least be included, where the respective portions of the DL transmission data, the guard period, the LTL transmission data should also be configurable, for example, based on the network dynamics of NR. In addition, sidelink resources may also be provided in an NR frame to support ProSe services or V2X services.

In addition, the terms "system" and "network" herein may be used interchangeably. The term "and/or" herein is only an association relationship for describing associated objects, and represents that three relationships may exist. For example, A and/or B may indicate that: A exists alone, A and B exist at the same time, or B exists alone. In addition, the character "/" herein generally represents that the former and latter associated objects are in an "or" relationship.

Because multi-beam operation may be supported in NR, an RA procedure in NR may be different from an RA procedure in Long Term Evolution (LTE). For example, before an RA is initiated, a base station (e.g., gNB) may provide to a LTE, through system information, association information between synchronization signal blocks (SSBs) and one or more Random Access Channel (RACH) resources. The base station may also provide, to the UE, a reference signal received power (RSRP) threshold for SSB selection. After the RA is initiated, during the step of RA resource selection, the UE may perform DL reference signal (e.g., SSB, or Channel State Information Reference Signal (CSI-RS)) measurement for beam selection.

In NR, the RA procedure may be triggered by one or more of the following events, including:
- initial access from a radio resource control (RRC) idle state (RRC_IDLE);
- RRC Connection Re-establishment procedure;
- Handover (HO);
- DL or UL data arrival during RRC connected state (RRC_CONNECTED) when UL synchronization status is "non-synchronized";
- transition from RRC_INACTIVE;
- establishing time alignment at Secondary Cell (SCell) addition;
- request for other system information; and
- beam failure recovery (BFR).

Based on whether an RA preamble transmitted by the LTE has a possibility of colliding with another UE's transmitted preamble or not, there may be two types of RA: contention-based RA (CBRA) and contention-free RA (CFRA). A normal DL/LTL transmission may take place after completion of an RA procedure.

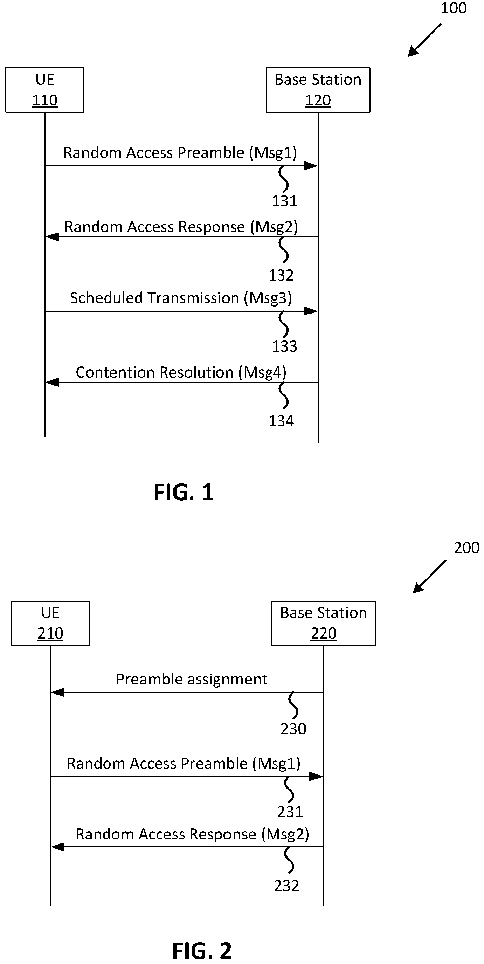

Fig. 1 is a diagram 100 illustrating an example CBRA procedure, according to an example implementation of the present application. A CBRA procedure may also be referred to as a 4-step Random Access Channel (RACH) procedure. In action 131, UE 110 transmits a Message 1 (Msg1) to base station 120. The Msg1 may include a Random Access (RA) preamble transmitted on a Physical Random Access Channel (PRACH). In action 132, base station 120 transmits a message 2 (Msg2), which may include a Random Access Response (RAR), to UE 110. The Msg2 may carry resource allocation information, such as a UL grant, for a message 3 (Msg3) transmission. After UE 110 successfully decodes the RAR, in action 133, UE 110 sends the Msg3 on the granted resource to base station 120. The Msg3 may include an RRC message, such as an RRC connection request message. The Msg3 may be a MAC PDU carrying data that is received from an upper layer on a Common Control Channel (CCCH). During the RA procedure, the Msg3 may be stored in a Msg 3 buffer to prevent loss of the data received from the upper layer on the CCCH. In action 134, base station 120 sends a message 4 (Msg4) to UE 110. The Msg4 may include a contention resolution MAC Control Element (CE).

Fig. 2 is a diagram 200 illustrating an example CFRA procedure, according to an example implementation of the present application. A CFRA procedure may also be referred to as a 2-step RACH procedure. In action 230, base station 220 assigns a preamble to UE 210. In action 231, UE 210 transmits a Msg1 to base station 220. In action 232, base station 220 transmits a Msg2, which may include an RAR, to UE 210.

In NR, before each preamble transmission or retransmission (e.g., including the first preamble transmission and the preamble retransmission after each random back off) within an RA procedure, a UE may perform an RA resource selection. During the RA resource selection, there may be two types of RA resources: a CBRA resource (e.g., the random access preamble is selected by a MAC entity from one or more contention-based random access preambles) and a CFRA resource (e.g., the random access preamble is not selected by the MAC entity from one or more contention-based random access preambles). It should be noted that the CFRA resource may not be necessarily configured to the UE by a base station (e.g., gNB). If the CFRA resource is configured by the base station, the UE may select either the CFRA resource or the CBRA resource before each time of performing an RA preamble transmission procedure. In other words, within an ongoing RA procedure, the UE may be allowed to transmit or retransmit the RA preamble via a CBRA resource or a CFRA resource alternately. In the following description, the term CBRA may mean the preamble is transmitted via a CBRA resource, and the term CFRA may mean the preamble is transmitted via a CFRA resource. Within an ongoing RA procedure, the UE may switch between the CBRA and CFRA.

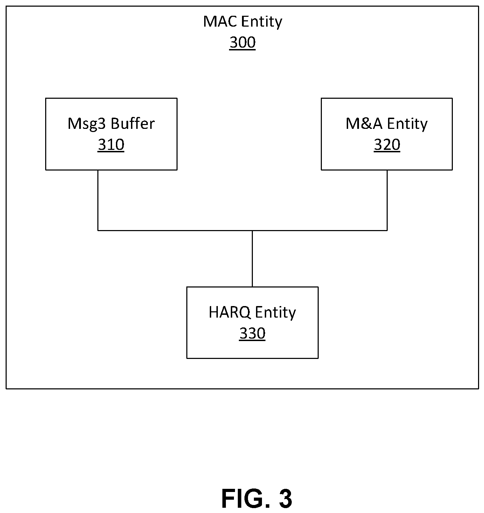

Fig. 3 is a block diagram illustrating a MAC entity of a UE. MAC entity 300 includes Msg3 buffer 310, Multiplex and Assembly (M&A) entity 320, and Hybrid Automatic Repeat Request (HARQ) entity 330.

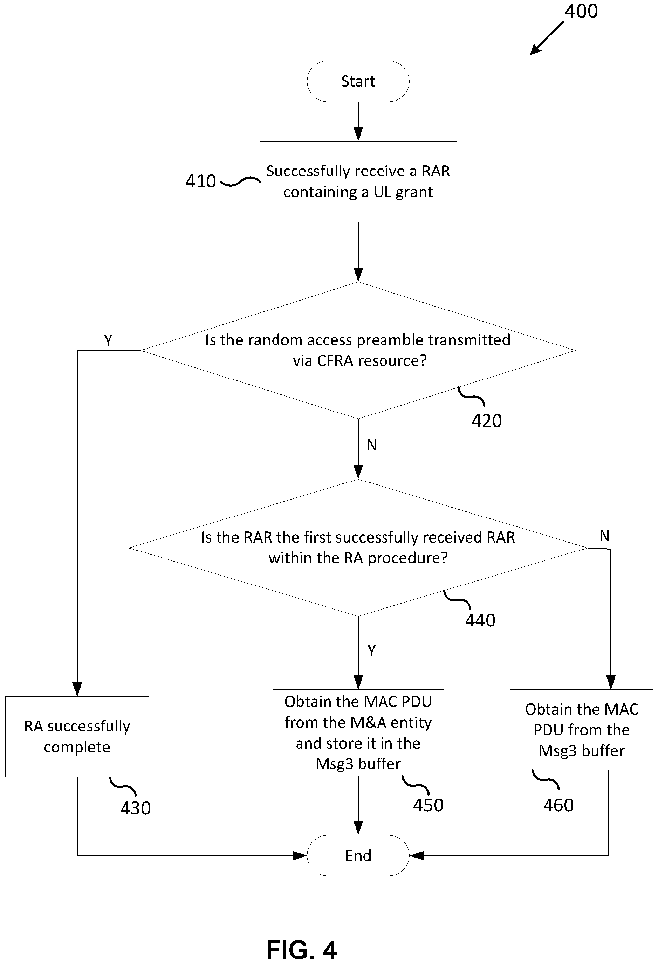

Fig. 4 is a flowchart of method 400 performed by a MAC entity (e.g., MAC entity 300 in Figure 3) in an RA procedure, according to an example implementation of the present application. In action 410, a UE's MAC entity 300 successfully receives an RAR that contains a LTL grant. In one implementation, successful reception of the RAR may mean that a downlink assignment has been received on the Physical Down Link Control Channel (PDCCH) for the Radio Network Temporary Identifier (RA-RNTI) and the received Transport Block (TB) is successfully decoded. The RAR may contain a MAC subPDU with a Random Access Preamble identifier corresponding to the transmitted preamble index. If MAC entity 300 is performing CFRA (e.g., the "yes" branch of action 420), in action 430, the RA procedure may successfully complete. If MAC entity 300 is performing CBRA (e.g., the "no" branch of action 420), in action 440, MAC entity 300 may determine whether the RAR received in action 410 is the first successfully received RAR within the RA procedure.

During an RA procedure, before contention resolution is successful, MAC entity 300 may successfully receive an RAR several times because the RA preamble may be retransmitted several times. When MAC entity 300 successfully receives the RAR for the first time within this RA procedure (e.g., the "yes" branch of action 440), in action 450, MAC entity 300 may obtain a MAC PDU from M&A entity 320. M&A entity 320 may also be represented as an M&A procedure in some implementations. In one implementation, MAC entity 300 may perform the M&A procedure to obtain a MAC PDU and transmit the MAC PDU on the granted resources. In action 450, MAC entity 300 may also store the obtained MAC PDU in Msg3 buffer 310. Action 450 may also be represented as "Obtain the MAC PDU from the M&A procedure and store it in the Msg3 buffer" in some implementations. When the RAR is not the first successfully received RAR within this RA procedure (e.g., the "no" branch of action 440), in action 460, MAC entity 300 may obtain a MAC PDU from Msg3 buffer 310.

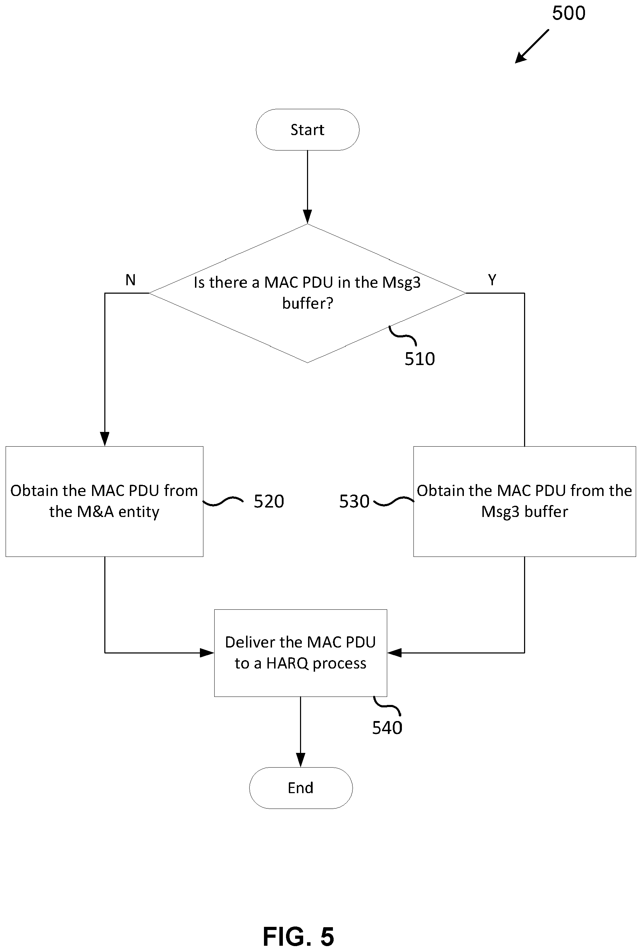

Fig. 5 is a flowchart of method 500 performed by a HARQ entity (e.g., HARQ entity 330 in Figure 3) in an RA procedure, according to the present application. In action 510, when a UL grant is appended in an RAR, a UE's HARQ entity 330 checks whether there is a MAC PDU stored in Msg3 buffer 310. If there is a MAC PDU stored in Msg3 buffer 310, in action 530, HARQ entity 330 obtains the MAC PDU from Msg3 buffer 310. Otherwise, in action 520, HARQ entity 330 may obtain the MAC PDU from M&A entity 320. Afterwards, in action 540, HARQ entity 330 may deliver the obtained MAC PDU to a HARQ process. In one implementation, there may be several HARQ processes performed by HARQ entity 330, with each HARQ process having a HARQ process ID (e.g., HARQ process #0, HARQ process #1, HARQ process #2, and so on).

It should be noted that the size of the UL grant allocated by a base station may be up to its implementation, which means the size of the UL grant received in the RAR may be different from the size of the MAC PDU stored in Msg3 buffer 310. This problem may arise when the UE is configured with CFRA resources, but at the RA resource selection stage, there is no SSB associated with the CFRA resources having a Synchronization Signal Reference Signal Received Power (SS-RSRP) above a selection threshold (which may be configured by the base station). In this case, the UE may be forced to perform CBRA (e.g., to select CBRA resources). In one implementation, the UE may select any SSB if there is no SSB having SS-RSRP above the threshold. When the CBRA fails in the contention resolution stage, the UE may fall back to the RA resource selection stage, and this time the UE may successfully select an SSB associated with the CFRA resources. In this case, the UE may switch to CFRA for RA retry, and the base station may either allocate a larger UL grant (e.g., via an RAR) for Msg3 (which may contain a HO complete command) or allocate a smaller UL grant because UL resource is not enough. Because the size of the LTL grant may be larger or smaller according to the base station's implementation, there may be a problem when transmitting the Msg3 containing the HO complete command.

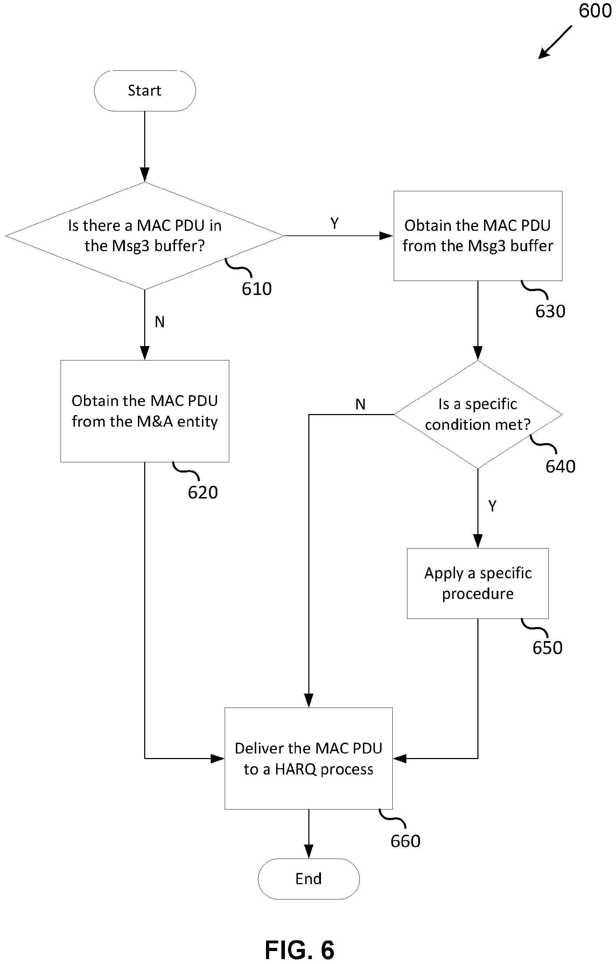

Fig. 6 is a flowchart of method 600 performed by a HARQ entity (e.g., HARQ entity 330 in Figure 3) in an RA procedure. When a LTE receives a LTL grant in the RAR, in action 610, the UE's HARQ entity 330 checks whether there is a MAC PDU stored in Msg3 buffer 310. If there is a MAC PDU stored in Msg3 buffer 310, in action 630, HARQ entity 330 obtains the MAC PDU from Msg3 buffer 310. Otherwise, in action 620, HARQ entity 330 may obtain the MAC PDU from M&A entity 320. After action 630, HARQ entity 330 checks whether a specific condition is satisfied in action 640. If the specific condition is satisfied, in action 650, HARQ entity 330 applies a specific procedure. Otherwise, in action 660, HARQ entity 330 may deliver the obtained MAC PDU to a HARQ process. After performing action 620 or action 650, HARQ entity 330 may also deliver the obtained MAC PDU to a HARQ process in action 660.

In action 640, HARQ entity 330 checks whether the size of the LTL grant is equal to the size of the MAC PDU obtained from Msg3 buffer 310 or not. If the size of the UL grant is different from the size of the MAC PDU obtained from Msg3 buffer 310 (e.g., the specific condition in action 640 is met), in action 650, HARQ entity 330 may inform or instruct M&A entity 320 to rebuild a new MAC PDU. In action 660, HARQ entity 330 may deliver the new MAC PDU (e.g., the rebuilt MAC PDU) to a HARQ process.

In one implementation, action 650 may further include HARQ entity 330/M&A entity 320/MAC entity 300 storing the new MAC PDU in Msg3 buffer 310.

In one implementation, action 650 may further include HARQ entity 330/M&A entity 320/MAC entity 300 requesting to flush the Msg3 buffer 310 before or after informing/instructing M&A entity 320 to rebuild the new MAC PDU.

In one implementation, action 650 may further include HARQ entity 330 delivering the obtained MAC PDU to M&A entity 320 and requesting MAC entity 300 to flush Msg3 buffer 310. Afterwards, M&A entity 320 may rebuild a new MAC PDU and deliver the new MAC PDU to Msg3 buffer 310 (or M&A entity 320 may store the new MAC PDU in Msg3 buffer 310). Then HARQ entity 330 may obtain the rebuilt MAC PDU from Msg3 buffer 310.

In one implementation, action 650 may further include HARQ entity 330 indicating to M&A entity 320 to rebuild a MAC PDU. After receiving the indication, M&A entity 320 may obtain the MAC PDU stored in Msg3 buffer 310 and flush the Msg3 buffer 310. Afterwards, M&A entity 320 may rebuild a new MAC PDU and deliver the new MAC PDU to Msg3 buffer 310 (or M&A entity 320 may rebuild a new MAC PDU and store the new MAC PDU in Msg3 buffer 310). Then HARQ entity 330 may obtain the rebuilt MAC PDU from Msg3 buffer 310.

M&A entity 320 may perform a logical channel prioritization (LCP) procedure. In one implementation, the LCP may be triggered when a new transmission is performed. Within the LCP, M&A entity 320 may generate a MAC PDU by allocating resources to logical channels (e.g., pack MAC SDU(s) received from one or more logical channels (LCHs) into a MAC PDU) and multiplexing the MAC SDU with the MAC CE. A MAC PDU may include one or multiple MAC subPDUs. Each subPDU may carry one of the following:
- a MAC subheader only (including padding);
- a MAC subheader and a MAC SDU;
- a MAC subheader and a MAC CE; and
- a MAC subheader and padding.

In one implementation, the LCP may also be performed by M&A entity 320 when M&A entity 320 rebuilds a MAC PDU. The behavior in an LCP triggered by rebuilding a MAC PDU may be different from that in an LCP triggered by a new transmission. For example, when M&A entity 320 rebuilds a MAC PDU (or builds a new MAC PDU), the LCP performed by M&A entity 320 may need to consider at least one of the following: the obtained MAC PDU from Msg3 buffer 310, the MAC SDU(s) received from the LCHs, the MAC CE, and the padding subPDU. M&A entity 320 may need to check whether each of the subPDUs within the MAC PDU obtained from Msg3 buffer 310 can be packed into the new MAC PDU by considering the size of the UL grant and/or some other criteria.

It should be noted that when M&A entity 320 starts to rebuild a MAC PDU, the MAC PDU (which is obtained from Msg3 buffer 310) may be in HARQ entity 330, rather than in M&A entity 320. Hence, some procedures may be needed to be performed by HARQ entity 330 and M&A entity 320. For example, HARQ entity 330 may deliver the MAC PDU to M&A entity 320. In addition, in order to pack the MAC PDU (which includes one or more MAC subPDUs) obtained from Msg3 buffer 310 into a new MAC PDU, some interactions between HARQ entity 330 and M&A entity 320 may also be needed. For example, before M&A entity 320 rebuilds the MAC PDU, M&A entity 320 may need to obtain the MAC PDU from Msg3 buffer 310 or from HARQ entity 330.

There may be several implementations regarding how M&A entity 320 obtains the MAC PDU stored in Msg3 buffer 310. In one implementation, HARQ entity 330 may deliver the MAC PDU (which is obtained from Msg3 buffer 310) to M&A entity 320 first, and then HARQ entity 330 may obtain a new MAC PDU from M&A entity 320 afterward. In one implementation, M&A entity 320 may obtain the MAC PDU from HARQ entity 330 first, and then HARQ entity 330 may obtain the new MAC PDU from M&A entity 320 afterward. In one implementation, HARQ entity 330 may discard the MAC PDU (which is obtained from Msg3 buffer 310), and then obtain the new MAC PDU from M&A entity 320. Each of the alternative implementations introduced above may be applicable to specific cases. Hence, the determination of which interaction to be applied between HARQ entity 330 and M&A entity 320 may be based on the content within the MAC PDU (which is obtained from Msg3 buffer 310) or based on some other events. For example, the determination may be based on whether the MAC PDU obtained from Msg3 buffer 310 contains the data (e.g., MAC SDU) from a specific logical channel (e.g., CCCH or Dedicated Control Channel (DCCH)).

As mentioned above, M&A entity 320 may also be represented as an M&A procedure. When M&A is represented as an entity, M&A entity 320 may generate a MAC PDU through the LCP. When M&A is represented as a procedure, MAC entity 300 may generate a MAC PDU through an M&A procedure that includes the LCP. Both of these two alternative expressions (M&A entity and M&A procedure) may be logically adopted in some implementations.

In the present application, action 640 shown in Fig. 6 refers to a condition to trigger a procedure for rebuilding a MAC PDU, and action 650 shown in Fig. 6 refers to the procedure for rebuilding the MAC PDU. Several implementations of the specific condition in action 640 and the specific procedure in action 650 are described in the following description.

The specific condition in action 640 depends on the size of the UL grant and the size of the MAC PDU stored in Msg3 buffer 310.

**Case 1-1:** the specific condition in action 640 is satisfied when the size of the UL grant is larger than the size of the MAC PDU stored in Msg3 buffer 310.

**Case 1-2:** the specific condition in action 640 is satisfied when the size of the UL grant is smaller than the size of the MAC PDU stored in Msg3 buffer 310.

**Case 1-3:** the specific condition in action 640 is satisfied when the size of the UL grant is different from the size of the MAC PDU stored in Msg3 buffer 310.

**Case 1-4:** the specific condition in action 640 is satisfied when the difference between the size of the LTL grant and the size of the MAC PDU stored in Msg3 buffer 310 is larger or smaller than a specific value.

**Case 1-5:** the specific condition in action 640 is satisfied when the size of the UL grant is larger or smaller than a value that is preconfigured by a base station.

**Case 1-6:** the specific condition in action 640 is satisfied when the size of the UL grant is larger or smaller than a predetermined value (e.g., a value that is defined in a technical standard).

**Case 1-7:** some other events may be considered when checking the specific condition in action 640.

Case 1-7-a: In one implementation, the specific condition in action 640 is satisfied when a specific timer within MAC entity 300/upper layer/lower layer is running. In one implementation, the specific condition in action 640 is satisfied when a specific timer within MAC entity 300/upper layer/lower layer is not running.

Case 1-7-b: In one implementation, the specific condition in action 640 is satisfied when a specific HARQ process ID is configured to the UL grant. For example, the specific condition in action 640 is satisfied when the UL grant is associated with a HARQ process ID used for the Msg3 transmission (e.g., HARQ Process #0). In one implementation, the specific condition in action 640 is satisfied when a specific HARQ related configuration is configured to MAC entity 300.

Case 1-7-c: In one implementation, the specific condition in action 640 is satisfied when a specific higher/lower layer configuration is configured. For example, a Radio Link Control (RLC) entity that is configured for a radio bearer applied to deliver the Msg3 is configured with a specific operation mode (e.g., acknowledge mode, unacknowledged mode, or transparent mode) or a specific configuration. Another example may be the HARQ process configured to transmit the MAC PDU has a specific configuration.

In one implementation, a method performed by HARQ entity 330 may be as described in the following Table 1:

**Table 1**

| | | | | |
|---|---|---|---|---|
| For each uplink grant, the HARQ entity may: | | | | |
| 1>identify the HARQ process associated with this grant, and for each identified HARQ process: | | | | |
| | 2> if the received grant was not addressed to a Temporary Cell RNTI (C-RNTI) on PDCCH, and the new data indicator (NDI) provided in the associated HARQ information has been toggled compared to the value in the previous transmission of this TB of this HARQ | | | |
| | | process; or | | |
| | 2> if the uplink grant was received on PDCCH for the C-RNTI and the HARQ buffer of the identified process is empty; or | | | |
| | 2> if the uplink grant was received in a Random Access Response; or | | | |
| (...) | | | | |
| | | 3> if there is a MAC PDU in the Msg3 buffer and the uplink grant was received in a Random Access Response: | | |
| | | | 4> obtain the MAC PDU to transmit from the Msg3 buffer. | |
| | | 3> else: | | |
| | | | 4> obtain the MAC PDU to transmit from the M&A entity, if any; | |
| | | 3> if a MAC PDU to transmit has been obtained: | | |
| | | | 4> if a specific condition (e.g., action 640) is satisfied; | |
| | | | | 5> perform a specific procedure (e.g., action 650); |
| | | | 4> deliver the MAC PDU and the uplink grant and the HARQ information of the TB to the identified HARQ process; | |
| | | | 4> instruct the identified HARQ process to trigger a new transmission; | |

The specific condition in action 640 may include Cases 1-1 through 1-7 (or any combination thereof). The specific procedure in action 650 may include Cases 2-1 through 2-6 (or any combination thereof) which are described below. In the present invention, the specific condition in action 640 includes the combination of Cases 1-3 and 1-7-b and the specific procedure in action 650 includes the combination of Cases 2-6-h and 2-6-i. Once the MAC PDU is rebuilt (e.g., once action 650 is performed), there may be some interactions between HARQ entity 330 and M&A entity 320.

### Case 2-1: HARQ entity 330 delivers MAC PDU to M&A entity 320

In one implementation, HARQ entity 330 may deliver the MAC PDU (which is obtained from Msg3 buffer 310) to M&A entity 320 first, and then HARQ entity 330 may obtain a rebuilt MAC PDU from M&A entity 320 afterward. In one implementation, in action 660, HARQ entity 330 may deliver the new MAC PDU (the rebuilt MAC PDU) to a HARQ process. In one implementation, action 650 may further include HARQ entity 330/M&A entity 320/MAC entity 300 storing the new MAC PDU in Msg3 buffer 310 (e.g., overwriting the content stored in Msg3 buffer 310). In one implementation, action 650 may further include HARQ entity 330/M&A entity 320/MAC entity 300 flushing Msg3 buffer 310 (e.g., clearing the content stored in Msg3 buffer 310) before or after informing/instructing M&A entity 320 to rebuild the new MAC PDU. In one implementation, action 650 may further include HARQ entity 330 delivering the obtained MAC PDU to M&A entity 320 and requesting MAC entity 300 to flush Msg3 buffer 310. Afterwards, M&A entity 320 may rebuild a new MAC PDU and deliver the new MAC PDU to Msg3 buffer 310 (or M&A entity 320 may store the new MAC PDU in Msg3 buffer 310). Then HARQ entity 330 may obtain the rebuilt MAC PDU from Msg3 buffer 310.

Case 2-1-a: HARQ entity 330 may deliver the MAC PDU obtained from Msg3 buffer 310 to M&A entity 320, and obtain the rebuilt MAC PDU from M&A entity 320.

Case 2-1-b: HARQ entity 330 may flush Msg3 buffer 310, deliver the MAC PDU obtained from Msg3 buffer 310 to M&A entity 320, obtain the rebuilt MAC PDU from M&A entity 320, and store the rebuilt MAC PDU in Msg3 buffer 310.

Case 2-1-c: HARQ entity 330 may deliver the MAC PDU obtained from Msg3 buffer 310 to M&A entity 320, request MAC entity 300 to flush Msg3 buffer 310, obtain the rebuilt MAC PDU from M&A entity 320, and store the rebuilt MAC PDU in Msg3 buffer 310.

### Case 2-2: MAC PDU is obtained by M&A entity 320 (without explicitly indicating the MAC PDU to be delivered from HARQ entity 330 to M&A entity 320)

In one implementation, HARQ entity 330 may indicate to M&A entity 320 to rebuild the MAC PDU, and then HARQ entity 330 may obtain a new MAC PDU (rebuilt MAC PDU) from M&A entity 320 afterward. In one implementation, in action 660, HARQ entity 330 may deliver the new MAC PDU (the rebuilt MAC PDU) to a HARQ process. In one implementation, action 650 may further include HARQ entity 330/M&A entity 320/MAC entity 300 storing the new MAC PDU in Msg3 buffer 310 (e.g., overwriting the content stored in Msg3 buffer 310). In one implementation, action 650 may further include HARQ entity 330/M&A entity 320/MAC entity 300 flushing Msg3 buffer 310 (e.g., clearing the content stored in Msg3 buffer 310) before or after informing/instructing M&A entity 320 to rebuild the new MAC PDU. In one implementation, action 650 may further include HARQ entity 330 indicating to M&A entity 320 to rebuild the MAC PDU. After receiving the indication, M&A entity 320 may obtain the MAC PDU stored in Msg3 buffer 310 and flush Msg3 buffer 310. Afterwards, M&A entity 320 may rebuild a new MAC PDU and deliver the new MAC PDU to Msg3 buffer 310 (or M&A entity 320 may store the new MAC PDU in Msg3 buffer 310). Then HARQ entity 330 may obtain the rebuilt MAC PDU from Msg3 buffer 310.

Case 2-2-a: HARQ entity 330 may indicate to M&A entity 320 to rebuild the MAC PDU, and obtain the rebuilt MAC PDU from M&A entity 320.

Case 2-2-b: HARQ entity 330 may indicate to M&A entity 320 to rebuild the MAC PDU, obtain the rebuilt MAC PDU from M&A entity 320, flush Msg3 buffer 310, and store the rebuilt MAC PDU in Msg3 buffer 310.

In one implementation, a logical channel prioritization procedure may be applied (e.g., by M&A entity 320) when (a) a new transmission is performed, (b) an indication is received from other entities (e.g., HARQ entity 330, MAC entity 300, upper layers, or lower layers), (c) some criteria for rebuilding the MAC PDU are satisfied, or (d) a MAC PDU has already been generated but somehow needs to be rebuilt due to some specific events (e.g., the size of the MAC PDU is not equal to the size of the updated UL grant size (the TB size is changed), the UL resource is canceled by a base station or some other indications from upper/lower layers, a transmission cancellation is triggered by MAC entity 300 itself or some other events).

In one implementation, the LCP procedure may be applied whenever a new transmission is performed or a MAC PDU is rebuilt. In one implementation, the LCP procedure may be applied whenever a new transmission is performed or indicated by a HARQ entity.

In one implementation, when rebuilding a MAC PDU, an M&A entity may obtain the MAC PDU from a HARQ entity that triggers the procedure of rebuilding the MAC PDU. In one implementation, when rebuilding a MAC PDU, an M&A entity may obtain the MAC PDU from a Msg3 buffer when being indicated by a HARQ entity.

### Case 2-3: MAC PDU has been obtained by the M&A entity

In one implementation, HARQ entity 330 may discard the MAC PDU that is obtained from Msg3 buffer 310, and then HARQ entity 330 may obtain a new MAC PDU from M&A entity 320. In one implementation, in action 660, HARQ entity 330 may deliver the new MAC PDU (the rebuilt MAC PDU) to a HARQ process. In one implementation, action 650 may further include HARQ entity 330/M&A entity 320/MAC entity 300 storing the new MAC PDU in Msg3 buffer 310 (e.g., overwriting the content stored in Msg3 buffer 310). In one implementation, action 650 may further include HARQ entity 330/M&A entity 320/MAC entity 300 flushing Msg3 buffer 310 (e.g., clearing the content stored in Msg3 buffer 310) before or after informing/instructing M&A entity 320 to rebuild the new MAC PDU. In one implementation, action 650 may further include HARQ entity 330 delivering the obtained MAC PDU to M&A entity 320 and requesting MAC entity 300 to flush Msg3 buffer 310. Afterwards, M&A entity 320 may rebuild a new MAC PDU and deliver the new MAC PDU to Msg3 buffer 310 (or M&A entity 320 may store the new MAC PDU in Msg3 buffer 310). Then HARQ entity 330 may obtain the rebuilt MAC PDU from Msg3 buffer 310. In one implementation, action 650 may further include HARQ entity 330 indicating to M&A entity 320 to rebuild the MAC PDU. After receiving the indication, M&A entity 320 may obtain the MAC PDU stored in Msg3 buffer 310 and flush Msg3 buffer 310. Afterwards, M&A entity 320 may rebuild a new MAC PDU and deliver the new MAC PDU to Msg3 buffer 310 (or M&A entity 320 may store the new MAC PDU in Msg3 buffer 310). Then HARQ entity 330 may obtain the rebuilt MAC PDU from Msg3 buffer 310.

Case 2-3-a: HARQ entity 330 may discard the MAC PDU that is obtained from Msg3 buffer 310, indicate to M&A entity 320 to rebuild the MAC PDU, and obtain the rebuilt MAC PDU from M&A entity 320.

Case 2-3-b: HARQ entity 330 may discard the MAC PDU that is obtained from Msg3 buffer 310, indicate to M&A entity 320 to rebuild the MAC PDU, flush Msg3 buffer 310, obtain the rebuilt MAC PDU from M&A entity 320, and store the rebuilt MAC PDU in Msg3 buffer 310.

After M&A entity 320 obtains the MAC PDU (e.g., either from Msg3 buffer 310 or from HARQ entity 330), M&A entity 320 may start to rebuild the MAC PDU. There are several implementations regarding how M&A entity 320 rebuilds the MAC PDU.

### Case 2-4: Modify the padding subPDU

In one implementation, during the procedure of rebuilding a MAC PDU, M&A entity 320 may keep at least one or all of the subPDUs carrying the MAC CE and/or subPDUs carrying the MAC SDU contained in the original MAC PDU, without modifying the corresponding subheader (and MAC SDU and/or MAC CE). For example, the new MAC PDU (the rebuilt MAC PDU) may include at least one or all of the subPDU(s) carrying the MAC CE and/or subPDU(s) carrying the MAC SDU from the original MAC PDU.

In one implementation, if the original MAC PDU (before being rebuilt) also contains a subPDU with padding or a subPDU with a subheader only (including padding), these two types of subPDUs may be modified to meet the LTL grant (e.g., TB size). In one implementation, M&A entity 320 may not allocate the remaining UL resource (e.g., the extra UL resource within the UL grant after packing all of the subPDUs within the obtained MAC PDU) to any logical channel. In one implementation, M&A entity 320 may remove/discard the padding subPDU and add a new/updated padding subPDU. In one implementation, M&A entity 320 may update the subheader and/or the padding bits of the padding subPDU directly, or add extra one or more padding subPDUs to meet the UL grant.

In one implementation, the UE may also follow the rules below during the scheduling procedures:
- the LTE may not segment an RLC SDU (or partially transmitted SDU or retransmitted RLC PDU) if the whole SDU (or partially transmitted SDU or retransmitted RLC PDU) fits into the remaining resources of the associated MAC entity;
- if the UE segments an RLC SDU from the logical channel, it may maximize the size of the segment to fill the grant of the associated MAC entity as much as possible;
- the LTE may maximize the transmission of data;
- if the MAC entity is given a UL grant size that is equal to or larger than 8 bytes, while having data available for transmission, the MAC entity may not transmit only padding Buffer Status Report (BSR) and/or padding.
- if the scheduling procedure is not performed for a new transmission, the UE may not allocate resources to any logical channels;
- if the scheduling procedure is not performed for a new transmission, the remaining resources of the associated MAC entity may only be allocated to padding bits (or allocated to padding, or padding subPDU);
- if the scheduling procedure is not performed for a new transmission and the MAC PDU includes a padding subPDU, the padding subPDU may be removed/discarded.

In one implementation, the scheduling procedure may be performed to rebuild a MAC PDU if the scheduling procedure is not performed for a new transmission.

### Case 2-5: Combined with some discarding actions

In one implementation, during the procedure of rebuilding a MAC PDU, M&A entity 320 may not keep all of the subPDUs (contained in the original MAC PDU) in the new MAC PDU. Hence, some of the subPDUs may be discarded. In addition, the padding subPDU (if contained in the original MAC PDU) may be modified in order to meet the UL grant (e.g., TB size). In one implementation, M&A entity 320 may not allocate remaining UL resource to any logical channel. In one implementation, M&A entity 320 may remove/discard the padding subPDU and add a new/updated padding subPDU. In one implementation, M&A entity 320 may update the subheader and/or the padding bits of the padding subPDU directly, or add extra one or more padding subPDUs to meet the UL grant.

In one implementation, M&A entity 320 may decide which subPDU to be discarded within the MAC PDU according to a specific order. In one implementation, the specific order may be listed as below (lowest priority listed first):
- C-RNTI MAC CE or data from UL-CCCH;
- Configured Grant Confirmation MAC CE;
- MAC CE for BSR, with exception of BSR included for padding;
- Single Entry Power Headroom Report (PHR) MAC CE or Multiple Entry PHR MAC CE;
- data from any Logical Channel, except data from LTL-CCCH;
- MAC CE for Recommended bit rate query; and
- MAC CE for BSR included for padding.

It should be noted that the order of subPDUs to be discarded may be different in different implementations.

In one implementation, a UE may also follow the rules below during the scheduling procedures :
- if the scheduling procedure is not performed for a new transmission, the UE may not allocate resources to any logical channels;
- if the scheduling procedure is not performed for a new transmission, the remaining resources of the associated MAC entity may only be allocated to padding bits (or allocated to padding, or padding subPDU);
- if the scheduling procedure is not performed for a new transmission and the MAC PDU includes a padding subPDU, the padding subPDU may be removed/discarded;
- if the scheduling procedure is not performed for a new transmission, the subPDU (within MAC PDU which is under rebuilt) is allowed to be discarded.

In one implementation, logical channels may be prioritized in accordance with the following order (e.g., highest priority listed first):
- C-RNTI MAC CE or data from UL-CCCH;
- Configured Grant Confirmation MAC CE;
- MAC CE for BSR, with exception of BSR included for padding;
- Single Entry PHR MAC CE or Multiple Entry PHR MAC CE;
- data from any Logical Channel, except data from LTL-CCCH;
- MAC CE for Recommended bit rate query; and
- MAC CE for BSR included for padding.

It should be noted that the order may be reversed when discarding subPDU while MAC PDU is rebuilt.

In one implementation, M&A entity 320 may discard all of the subPDUs within the MAC PDU except the specific data listed below:
- data from CCCH;
- data from specific LCH;
- a specific type of MAC CE;
- a specific type and/or format of MAC CE which also satisfies specific condition(s);
- a BSR MAC CE that contains buffer status of a specific LCH or LCH group (LCG); and
- a BSR MAC CE that contains buffer status up to latest buffer status.

### Case 2-6: Add new subPDU from specific LCH

Case 2-6-a: In one implementation, after M&A entity 320 obtains a MAC PDU from either HARQ entity 330 or Msg3 buffer 310, M&A entity 320 may deconstruct the MAC PDU and reconstruct/rebuild a new MAC PDU.

Case 2-6-b: In one implementation, when reconstructing/rebuilding the new MAC PDU in Case 2-6-a, M&A entity 320 may be allowed to add at least one of followings to the MAC PDU: (a) any MAC CE; (b) a specific MAC CE; (c) data from any logical channel; and (d) data from a specific logical channel.

Case 2-6-c: In one implementation, when rebuilding the MAC PDU, except for a MAC subPDU with MAC CE and a MAC subPDU with padding, only the LCH that was selected to build the original MAC PDU (which is stored in Msg3 buffer 310) may be selected to allocate resource (e.g., allocation of resources within LCP). For example, MAC entity 300 may be configured with three logical channels (e.g., LCH #1, #2 and #3). The MAC PDU stored in Msg3 buffer 310 may contain MAC SDUs from LCH #1 and #2. In one implementation, when rebuilding the MAC PDU, MAC entity 300 may ignore all of the mapping restrictions for each of the configured logical channels. The mapping restrictions, in one implementation, may include a parameter *allowedSCS-List* that sets the allowed Subcarrier Spacing(s) for a transmission, a parameter *maxPUSCH-Duration* that sets the maximum Physical Uplink Shared Channel (PUSCH) duration allowed for a transmission, a parameter *configuredGrantType 1 Allowed* that sets whether a configured grant Type 1 can be used for a transmission, and a parameter *allowedServingCells* that sets the allowed cell(s) for a transmission. In the above example, except for the MAC subPDU with MAC CE and the MAC subPDU with padding, MAC entity 300 may only allocate resource to the LCH #1 and #2 when needed.

In one implementation, except for a MAC subPDU with MAC CE and a MAC subPDU with padding, MAC entity 300 may only allocate resource to a logical channel that satisfies all of the following conditions:
- the set of allowed Subcarrier Spacing index values in the parameter *allowedSCS-List,* if configured, includes the Subcarrier Spacing index associated to the UL grant;
- the parameter *maxPUSCH-Duration,* if configured, is larger than or equal to the PUSCH transmission duration associated to the UL grant;
- the parameter *configuredGrantType 1 Allowed,* if configured, is set to TRUE in case the UL grant is a Configured Grant Type 1; and
- the parameter *allowedServingCells,* if configured, includes the Cell information associated to the UL grant.

In one implementation, the two implementations mentioned above may be combined. For example, MAC entity 300 may be configured with three logical channels (e.g., LCH #1, #2 and #3). The MAC PDU stored in Msg3 buffer 310 may contain the MAC SDUs from LCH #1 and #2. When rebuilding the MAC PDU, except for the MAC subPDU with MAC CE and the MAC subPDU with padding, MAC entity 300 may only allocate resource to the LCH #1 and/or LCH #2 that satisfies all of the following conditions:
- the set of allowed Subcarrier Spacing index values in the parameter *allowedSCS-List,* if configured, includes the Subcarrier Spacing index associated to the UL grant;
- the parameter *maxPUSCH-Duration,* if configured, is larger than or equal to the PUSCH transmission duration associated to the UL grant;
- the parameter *configuredGrantType 1 Allowed,* if configured, is set to TRUE in case the UL grant is a Configured Grant Type 1; and
- the parameter *allowedServingCells,* if configured, includes the Cell information associated to the UL grant.

Case 2-6-d: In one implementation, when rebuilding a MAC PDU, M&A entity 320 may add padding directly (e.g., to fulfill the TB size granted by the RAR).

Case 2-6-e: In one implementation, when rebuilding a MAC PDU, M&A entity 320 may remove the padding first and then add new padding accordingly (e.g., to fulfill the TB size granted by the RAR).

Case 2-6-f: In one implementation, when rebuilding a MAC PDU, M&A entity 320 may keep some of the MAC subPDUs (e.g., MAC subheader only, MAC subheader and MAC SDU, MAC subheader and MAC CE, or MAC subheader and padding) from the obtained MAC PDU (which may be stored in Msg3 buffer 310 or received from HARQ entity 330). In one implementation, M&A entity 320 may discard some of the MAC subPDUs based on a predefined rule(s) and/or the TB size granted by the RAR.

Case 2-6-g: In one implementation, M&A entity 320 may keep some of the MAC subPDUs within the generated MAC PDU and/or discard some of the MAC subPDUs based on predefined rules and/or the TB size granted by any new UL grant. This case may happen when the generated MAC PDU cannot fulfill an updated UL grant size (e.g., the TB size is changed), the UL resource is canceled by a base station or some other indications from upper/lower layers, a transmission cancellation triggered by MAC entity 300 itself or some other events.

Case 2-6-h: When rebuilding a MAC PDU, M&A entity 320 keeps only the MAC subPDUs containing a MAC SDU from the CCCH and add padding afterward.

Case 2-6-i: When rebuilding a MAC PDU, M&A entity 320 may keep/drop/discard the MAC subPDUs containing a specific MAC CE (e.g., BSR MAC CE). In the present invention the M&A entity 320 discards the MAC subPDUs containing the specific MAC CE.

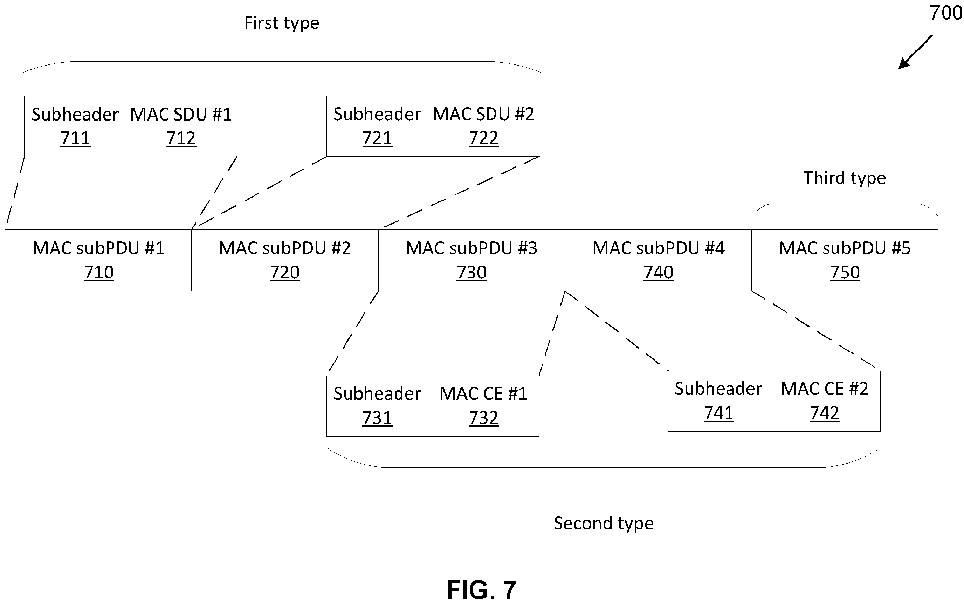

Fig. 7 shows MAC PDU 700, according to an example implementation of the present application. MAC PDU 700 may include MAC subPDU #1 710, MAC subPDU #2 720, MAC subPDU #3 730, MAC subPDU #4 740, and MAC subPDU #5 750. MAC subPDU #1 710 may include a MAC subheader 711 and a MAC SDU #1 712. MAC subPDU #2 720 may include a MAC subheader 721 and a MAC SDU #2 722. MAC subPDU #3 730 may include a MAC subheader 731 and a MAC CE #1 732 (e.g., a fixed-sized MAC CE). MAC subPDU #4 740 may include a MAC subheader 741 and a MAC CE #2 742 (e.g., a variable-sized MAC CE). MAC subPDU #5 750 may include padding.

MAC subPDU #1 710 and MAC subPDU #2 720 may belong to the first type of MAC subPDU that carries a MAC SDU. MAC subPDU #3 730 and MAC subPDU #4 740 may belong to the second type of MAC subPDU that carries a MAC CE. MAC subPDU #5 750 may belong to the third type of MAC subPDU that is used for padding. The MAC subPDU used for padding (e.g., MAC subPDU #5 750) may be optionally included in a MAC PDU (e.g., MAC PDU 700). That is, the number of MAC subPDUs that belong to the third type may be zero. It should be noted that the number of MAC subPDUs that belong to a specific type shown in Fig. 7 is merely exemplary rather than limiting. For example, the number of MAC subPDUs that belong to the first type (or second type) may also be more than two or less than two. In one implementation, the number of MAC subPDUs that belong to the second type may be zero, which means there is no MAC subPDU carrying a MAC CE in a MAC PDU.

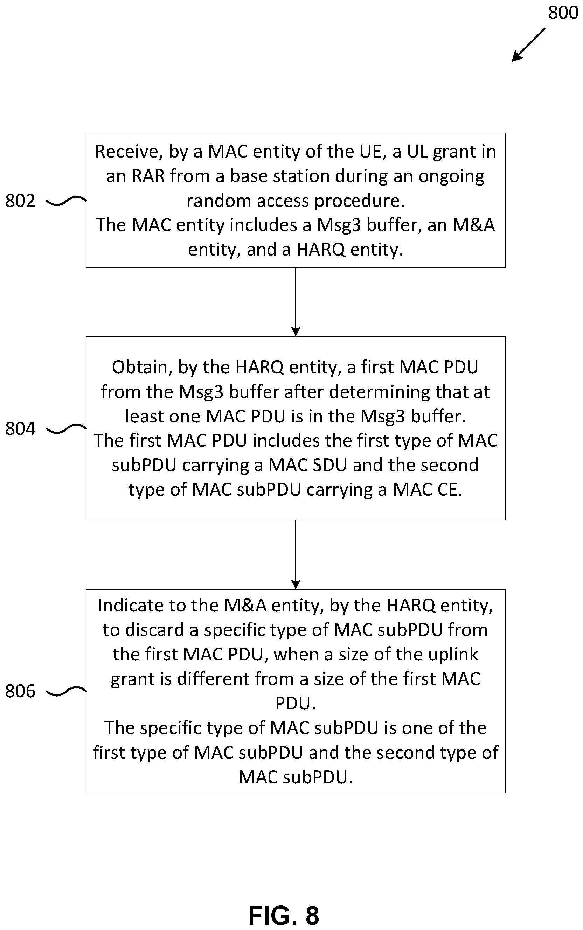

Fig. 8 is a flowchart of method 800 for an RA procedure performed by a UE, according to the present application. Method 800 includes actions 802, 804 and 806. As described above with reference to Fig. 3, MAC entity 300 of a UE includes Msg3 buffer 310, M&A entity 320, and HARQ entity 330. In action 802, MAC entity 300 of the UE receives a UL grant in an RAR from a base station during an ongoing random access procedure. In one implementation, the RAR that contains the UL grant may not be the first successfully received RAR during the ongoing random access procedure. Action 802 may be corresponding to action 132 shown in Fig. 1 or action 410 shown in Fig. 4.

In action 804, HARQ entity 330 checks if there is a MAC PDU in Msg3 buffer 310 (e.g., action 610 shown in Fig. 6). If there is a MAC PDU in Msg3 buffer 310, HARQ entity 330 obtains a first MAC PDU from Msg3 buffer 310. MAC PDU 700 shown in Fig. 7 may be taken as an example for the structure of the first MAC PDU. The first MAC PDU includes a first type of MAC subPDU carrying a MAC SDU (e.g., MAC subPDU #1 710 and MAC subPDU #2 720 shown in Fig. 7) and a second type of MAC subPDU carrying a MAC CE (e.g., MAC subPDU #3 730 and MAC subPDU #4 740 shown in Fig. 7).

In action 806, HARQ entity 330 checks the size of the UL grant and the size of the first MAC PDU (e.g., the specific condition in action 640 shown in Fig. 6). When the size of the UL grant is different from the size of the first MAC PDU (e.g., Case 1-1, Case 1-2, Case 1-3 described above), HARQ entity 330 may indicate to M&A entity 320 to discard a specific type of MAC subPDU from the first MAC PDU (e.g., the specific procedure in action 650 shown in Fig. 6). In one implementation, the specific type of MAC subPDU may be one of the first type of MAC subPDU and the second type of MAC subPDU. One implementation of action 806 may refer to Case 2-5, in which M&A entity 320 may discard some MAC subPDUs when rebuilding the MAC PDU.

In one implementation, the specific type of MAC subPDU may be the first type of MAC subPDU. In action 806, after receiving the indication from HARQ entity 330, M&A entity 320 may discard at least one or all of the MAC subPDUs that belong to the first type of MAC subPDU. Referring to the example shown in Fig. 7, in one implementation, M&A entity 320 may discard MAC subPDU #1 710 and MAC subPDU #2 720 from MAC PDU 700.

In one implementation, the specific type of MAC subPDU may be the second type of MAC subPDU. In action 806, after receiving the indication from HARQ entity 330, M&A entity 320 may discard at least one or all of the MAC subPDUs that belong to the second type of MAC subPDU. Referring to the example shown in Fig. 7, in one implementation, M&A entity 320 may discard MAC subPDU #3 730 and MAC subPDU #4 740 from MAC PDU 700.

In one implementation, method 800 may further include HARQ entity 330 obtaining a second MAC PDU from M&A entity 320; and HARQ entity 330 transmitting the second MAC PDU to the base station (e.g., action 133 shown in Fig. 1). In one implementation, the second MAC PDU may be a MAC PDU rebuilt by M&A entity 320 after receiving the indication from HARQ entity 330 in action 806. In one implementation, the second MAC PDU may be transmitted on a resource that is associated with the LTL grant received in action 802. In another implementation, the second MAC PDU may be transmitted on a resource that is not associated with the UL grant received in action 802. That is, the second MAC PDU may be a MAC PDU that is transmitted in a subsequent uplink transmission. In one implementation, the second MAC PDU may include at least one subPDU that belongs to the first type of MAC subPDU in the first MAC PDU (which is obtained in action 804). Referring to the example shown in Fig. 7, the second MAC PDU may include at least one of MAC subPDU #1 710 and MAC subPDU #2 720.

In one implementation, the first MAC PDU (which is obtained in action 804) may further include a third type of MAC subPDU that is used for padding (e.g., MAC subPDU #5 750 shown in Fig. 7). Method 800 may further include: when the size of the LTL grant is different from the size of the first MAC PDU (e.g., the specific condition in action 640 shown in Fig. 6), HARQ entity 330 may indicate to M&A entity 320 to discard the third type of MAC subPDU from the first MAC PDU (e.g., the specific procedure in action 650 shown in Fig. 6). Referring to the example shown in Fig. 7, in one implementation, M&A entity 320 may discard MAC subPDU #5 750 from MAC PDU 700. One implementation may refer to Case 2-5, in which M&A entity 320 may discard a MAC subPDU used for padding when rebuilding the MAC PDU.

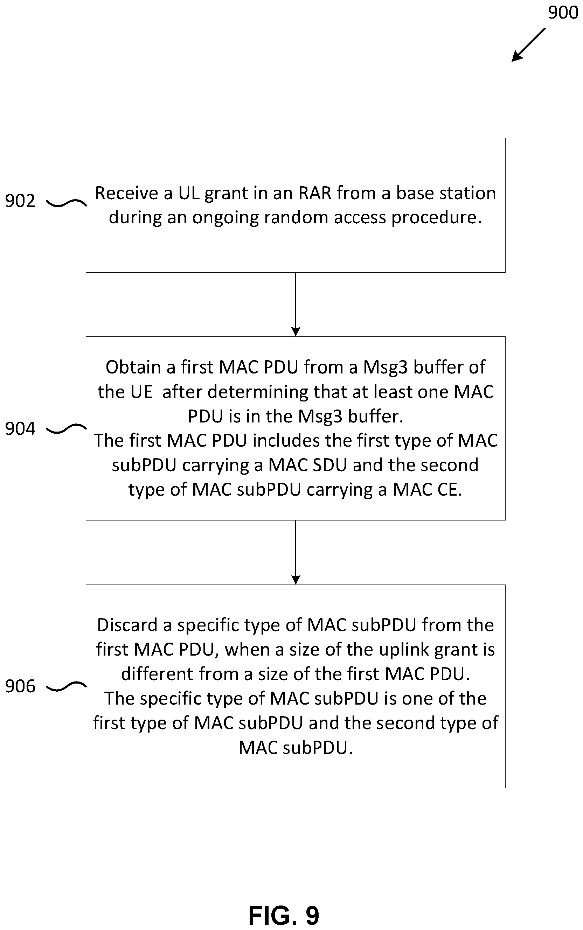

Fig. 9 is a flowchart of method 900 for an RA procedure performed by a LTE, according to an example implementation of the present application. Method 900 may include actions 902, 904 and 906. In action 902, the LTE may receive a LTL grant in an RAR from a base station during an ongoing random access procedure. Action 902 may be corresponding to action 132 shown in Fig. 1 or action 410 shown in Fig. 4.

In action 904, if there is a MAC PDU in the Msg3 buffer (e.g., action 610 shown in Fig. 6), the UE may obtain a first MAC PDU from the Msg3 buffer of the UE. MAC PDU 700 shown in Fig. 7 may be taken as an example for the structure of the first MAC PDU.

In action 906, when the size of the UL grant is different from the size of the first MAC PDU (e.g., action 640 shown in Fig. 6), the LTE may discard a specific type of MAC subPDU from the first MAC PDU (e.g., action 650 shown in Fig. 6). In one implementation, the specific type of MAC subPDU may be one of the first type of MAC subPDU and the second type of MAC subPDU. One implementation of action 806 may refer to Case 2-5, in which the UE may discard some MAC subPDUs when rebuilding the MAC PDU.

In one implementation, the specific type of MAC subPDU may be the first type of MAC subPDU. In action 906, the UE may discard at least one of or all of MAC subPDUs that belong to the first type of MAC subPDU. Referring to the example shown in Fig. 7, in one implementation, the LTE may discard MAC subPDU #1 710 and MAC subPDU #2 720 from MAC PDU 700.

In one implementation, the specific type of MAC subPDU may be the second type of MAC subPDU. In action 906, the UE may discard at least one of or all of MAC subPDUs that belong to the second type of MAC subPDU. Referring to the example shown in Fig. 7, in one implementation, the LTE may discard MAC subPDU #3 730 and MAC subPDU #4 740 from MAC PDU 700.

In one implementation, method 900 may further include the LTE transmitting a second MAC PDU to the base station (e.g., action 133 shown in Fig. 1). In one implementation, the second MAC PDU may be transmitted on a resource that is associated with the UL grant received in action 902. In another implementation, the second MAC PDU may be transmitted on a resource that is not associated with the UL grant received in action 902. That is, the second MAC PDU may be transmitted in a subsequent uplink transmission. In one implementation, the second MAC PDU may include at least one subPDU that belongs to the first type of MAC subPDU in the first MAC PDU (which is obtained in action 904). Referring to the example shown in Fig. 7, the second MAC PDU may include at least one of MAC subPDU #1 710 and MAC subPDU #2 720.

In one implementation, the first MAC PDU (which is obtained in action 904) may further include a third type of MAC subPDU that is used for padding (e.g., MAC subPDU #5 750 shown in Fig. 7). Method 900 may further include: when the size of the uplink grant is different from the size of the first MAC PDU (e.g., action 640 shown in Fig. 6), the UE may discard the third type of MAC subPDU from the first MAC PDU (e.g., action 650 shown in Fig. 6). Referring to the example shown in Fig. 7, in one implementation, the UE may discard MAC subPDU #5 750 from MAC PDU 700.

In one implementation, a method performed by M&A entity 320 (e.g., LCP procedure) may also be applied by HARQ entity 330. In addition, implementations provided in this disclosure may be logically combined or replaced by alternatives. The method and apparatus provided in this disclosure may also be applied to some other cases listed below:
- When a MAC PDU is generated (e.g., already existed in MAC entity 300) but a new UL grant size is determined or notified; and
- When an RA procedure is performed on a Supplementary UL (SUL) carrier.

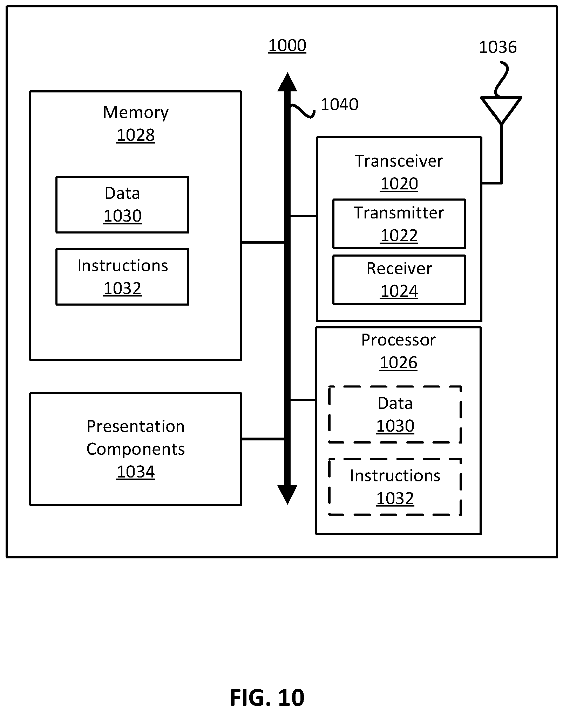

Fig. 10 is a block diagram illustrating a device for wireless communication, in accordance with various aspects of the present application. As shown in Fig. 10, a device 1000 may include a transceiver 1020, a processor 1028, a memory 1034, one or more presentation components 1038, and at least one antenna 1036. The device 1000 may also include an RF spectrum band module, a base station (BS) communications module, a network communications module, and a system communications management module, Input/Output (I/O) ports, I/O components, and power supply (not explicitly shown in Fig. 10). Each of these components may be in communication with each other, directly or indirectly, over one or more buses 1040. In one implementation, the device 1000 may be a UE or a base station that performs various functions described herein, for example, with reference to Figs. 1 through 9.

The transceiver 1020 having a transmitter 1022 (e.g., transmitting/transmission circuitry) and a receiver 1024 (e.g., receiving/reception circuitry) may be configured to transmit and/or receive time and/or frequency resource partitioning information. In some implementations, the transceiver 1020 may be configured to transmit in different types of subframes and slots including, but not limited to, usable, non-usable and flexibly usable subframes and slot formats. The transceiver 1020 may be configured to receive data and control channels.

The device 1000 may include a variety of computer-readable media. Computer-readable media may be any available media that may be accessed by the device 1000 and include both volatile and non-volatile media, removable and non-removable media. By way of example, and not limitation, computer-readable media may comprise computer storage media and communication media. Computer storage media includes both volatile and non-volatile, removable and non-removable media implemented in any method or technology for storage of information such as computer-readable instructions, data structures, program modules or data.

Computer storage media includes RAM, ROM, EEPROM, flash memory or other memory technology, CD-ROM, Digital Versatile Disks (DVD) or other optical disk storage, magnetic cassettes, magnetic tape, magnetic disk storage or other magnetic storage devices. Computer storage media does not comprise a propagated data signal. Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

The memory 1034 may include computer-storage media in the form of volatile and/or non-volatile memory. The memory 1034 may be removable, non-removable, or a combination thereof. Example memory includes solid-state memory, hard drives, optical-disc drives, and etc. As illustrated in Fig. 10, The memory 1034 may store computer-readable, computer-executable instructions 1032 (e.g., software codes) that are configured to, when executed, cause the processor 1028 to perform various functions described herein, for example, with reference to Figs. 1 through 8. Alternatively, the instructions 1032 may not be directly executable by the processor 1028 but be configured to cause the device 1000 (e.g., when compiled and executed) to perform various functions described herein.

The processor 1028 (e.g., having processing circuitry) may include an intelligent hardware device, e.g., a Central Processing Unit (CPU), a microcontroller, an ASIC, and etc. The processor 1028 may include memory. The processor 1028 may process the data 1030 and the instructions 1032 received from the memory 1034, and information through the transceiver 1020, the base band communications module, and/or the network communications module. The processor 1028 may also process information to be sent to the transceiver 1020 for transmission through the antenna 1036, to the network communications module for transmission to a core network.

One or more presentation components 1038 presents data indications to a person or other device. Examples of presentation components 1038 may include a display device, speaker, printing component, vibrating component, etc.

From the above description, it is manifested that various techniques may be used for implementing the concepts described in the present application. Moreover, while the concepts have been described with specific reference to certain implementations, the described implementations are to be considered in all respects as illustrative and not restrictive.

## Claims

1. A method (400, 600) for random access performed by a user equipment, UE (110, 210, 1000), the method comprising:
receiving (410), by a Medium Access Control, MAC, entity (300) of the UE, an uplink, UL, grant in a Random Access Response, RAR, from a base station (120, 220) during an ongoing random access procedure, wherein the MAC entity comprises a Message 3, Msg3, buffer (310), a multiplexing and assembly entity (320), and a Hybrid Automatic Repeat Request, HARQ entity (330);
obtaining (630), by the HARQ entity (330), a first Medium Access Control, MAC, Protocol Data Unit, PDU, from the Msg3 buffer (310) of the UE after determining (610) that at least one MAC PDU is in the Msg3 buffer, wherein the first MAC PDU comprises a first type of MAC subPDU carrying a MAC Service Data Unit, SDU, and a second type of MAC subPDU carrying a MAC Control Element, CE; and
indicating (650) to the multiplexing and assembly entity (320), by the HARQ entity (330), to discard the second type of MAC subPDU and generate a second MAC PDU by including the first type of MAC subPDU upon determining (640) that a size of the UL grant is different from a size of the first MAC PDU and the UL grant is associated with a HARQ process ID used for Msg3 transmission, wherein the HARQ process ID is HARQ process #0.

2. The method of claim 1, further comprising:
transmitting the second MAC PDU to the base station.

3. The method of claim 1, wherein the first MAC PDU further comprises a third type of MAC subPDU used for padding, and the method further comprises:
indicating to the multiplexing and assembly entity, by the HARQ entity, to discard the third type of MAC subPDU from the first MAC PDU when the size of the UL grant is different from the size of the first MAC PDU.

4. A user equipment, UE (110, 210, 1000), comprising:
one or more non-transitory computer-readable media (1028) having computer-executable instructions embodied thereon; and
at least one processor (1026) coupled to the one or more non-transitory computer-readable media, the at least one processor is configured to execute the computer-executable instructions to perform the method of any of claims 1 to 3.

## Patentansprüche

1. Verfahren (400, 600) zum wahlfreien Zugriff durch ein Teilnehmergerät, UE (110, 210, 1000), wobei das Verfahren umfasst:
Empfangen (410), von einer Medium Access Control (MAC, Medienzugriffssteuerungs-)Einheit (300) des UEs, einer Uplink (UL)-Genehmigung in einer Random Access Response (RAR, Direktzugriffsantwort) von einer Basisstation (120, 220) während eines fortlaufenden Direktzugriffvorgangs, wobei die MAC-Einheit einen Message 3 (Msg3)-Puffer (310), eine Multiplex- und Assemblierungseinheit (320) und eine Hybrid Automatic Repeat Request (HARQ, hybride automatische Wiederholungsanforderungs-)Einheit (330) aufweist;
Erhalten (630), durch die HARQ-Einheit (330), einer ersten Protocol Data Unit (PDU, Protokoll-Dateneinheit) für die Medienzugriffssteuerung (MAC) von dem Msg3-Puffer (310) des UEs nach dem Feststellen (610), dass zumindest eine MAC-PDU in dem Msg3-Puffer vorliegt, wobei die erste MAC-PDU einen ersten Typ von MAC-subPDU, der eine MAC-Service Data Unit (SDU, Dienst-Dateneinheit) trägt, und einen zweiten Typ von MAC-subPDU aufweist, der ein MAC-Control Element (CE, Steuerelement) trägt; und
Anweisen (650) an die Multiplex- und Assemblierungseinheit (320), durch die HARQ-Einheit (330), den zweiten Typ von MAC-subPDU zu verwerfen und eine zweite MAC-PDU durch Einbeziehen des ersten Typs von MAC-subPDU beim Feststellen (640) zu erzeugen, dass die Größe der UL-Genehmigung verschieden von der Größe der ersten MAC-PDU ist und die UL-Genehmigung einer für die Msg3-Übertragung verwendeten HARQ-Prozess-ID zugeordnet ist, wobei die HARQ-Prozess-ID HARQ-Prozess-ID #0 ist.

2. Verfahren nach Anspruch 1, ferner umfassend:
Übertragen der zweiten MAC-PDU an die Basisstation.

3. Verfahren nach Anspruch 1, wobei die erste MAC-PDU ferner einen dritten Typ von MAC-subPDU aufweist, der zum Padding (Auffüllen) verwendet wird, und das Verfahren ferner umfasst:
Anweisen an die Multiplex- und Assemblierungseinheit, durch die HARQ-Einheit, den dritten Typ von MAC-subPDU von der ersten MAC-PDU zu verwerfen, wenn die Größe der UL-Genehmigung von der Größe der ersten MAC-PDU verschieden ist.

4. Teilnehmergerät (UE) (110, 210, 1000), aufweisend:
ein oder mehrere nichtflüchtige, computerlesbare Medien (1028) mit darin enthaltenen computerausführbaren Anweisungen; und
zumindest einen Prozessor (1026), der mit dem einen oder den mehreren nichtflüchtigen computerlesbaren Medien gekoppelt ist, wobei der zumindest eine Prozessor ausgebildet ist, die computerausführbaren Anweisungen auszuführen, um das Verfahren nach einem der Ansprüche 1 bis 3 durchzuführen.

## Revendications

1. Procédé (400, 600) d'accès aléatoire effectué par un équipement utilisateur, UE (110, 210, 1000), le procédé comprenant :
la réception (410), par une entité de contrôle d'accès au support, MAC, (300) de l'UE, d'une autorisation de liaison montante, UL, dans une réponse d'accès aléatoire, RAR, depuis une station de base (120, 220) durant une procédure d'accès aléatoire en cours, l'entité MAC comprenant une mémoire tampon de message 3, Msg3, (310), une entité de multiplexage et d'assemblage (320), et une entité de demande de répétition automatique hybride, HARQ, (330) ;
l'obtention (630), par l'entité HARQ (330), d'une première unité de données de protocole, PDU, de contrôle d'accès au support, MAC, depuis la mémoire tampon Msg3 (310) de l'UE après qu'il a été déterminé (610) qu'au moins une MAC PDU se trouve dans la mémoire tampon Msg3, la première MAC PDU comprenant un premier type de MAC sous-PDU transportant une unité de données de service MAC, SDU, et un deuxième type de MAC sous-PDU transportant un élément de contrôle MAC, CE ; et
l'indication (650) à l'entité de multiplexage et d'assemblage (320), par l'entité HARQ (330), de rejeter le deuxième type de MAC sous-PDU et de générer une deuxième MAC PDU en incluant le premier type de MAC sous-PDU après qu'il a été déterminé (640) qu'une taille de l'autorisation UL est différente d'une taille de la première MAC PDU et que l'autorisation UL est associé à un ID de processus HARQ utilisé pour la transmission Msg3, l'ID de processus HARQ étant le processus HARQ #0.

2. Procédé selon la revendication 1, comprenant en outre :
la transmission de la deuxième MAC PDU à la station de base.

3. Procédé selon la revendication 1, dans lequel la première MAC PDU comprend en outre un troisième type de MAC sous-PDU utilisée pour le rembourrage, et le procédé comprend en outre :
l'indication à l'entité de multiplexage et d'assemblage, par l'entité HARQ, de rejeter le troisième type de MAC sous-PDU de la première MAC PDU lorsque la taille de l'autorisation UL est différente de la taille de la première MAC PDU.

4. Équipement utilisateur, UE (110, 210, 1000), comprenant :
un ou plusieurs supports non transitoires lisibles par ordinateur (1028) sur lesquels sont incorporées des instructions exécutables par ordinateur ; et
au moins un processeur (1026) couplé aux un ou plusieurs supports non transitoires lisibles par ordinateur, l'au moins un processeur étant configuré pour exécuter les instructions exécutables par ordinateur afin d'effectuer le procédé selon l'une quelconque des revendications 1 à 3.
